# EUROPEAN PATENT APPLICATION

(11) **EP 2 077 405 A1**
(43) Date of publication of application: **08.07.2009**
(21) Application number: 08250047.1
(22) Date of filing: 07.01.2008
(51) Int. Cl.: F16H 3/34, E05F 15/14

(54) **A declutching mechanism**

(71) Applicant: Meritor Technology, Inc., Troy MI 48084 (US)
(72) Inventor: Spurr, Nigel V., Solihull B90 2PS (GB); Sohanpal, Inderpal, West Midlands (GB); Coleman, Peter J., Droitwich Worcestershire WR9 8TU (GB)
(74) Representative: Jones, John Bryn

(57) **Abstract**

A declutching mechanism including
a chassis,
a first gear rotatable relative to the chassis about a first gear axis fixed relative to the chassis,
a second gear selectively engageable with the first gear,
an eccentric arrangement having a first shaft with a first shaft axis and a second shaft with a second shaft axis offset from the first shaft axis, the first shaft being non-rotatably fixed to the second shaft, the first shaft being selectively rotatably mounted in the chassis, the second gear being rotatably mounted on the second shaft,
a holding means for selectively holding the eccentric arrangement in a first position,
in which with the eccentric arrangement being held in the first position by the holding means the first and second gears are in meshing engagement and with the eccentric arrangement being released by the holding means, gear separating forces cause the eccentric arrangement to rotate about the first axis to a second position, thereby disengaging the first and second gears.

## Description

The present invention relates to a declutching mechanism.

Declutching mechanisms are known whereby power being transmitted along a transmission path can be interrupted.

The present invention relates to a specific form of declutching mechanism. Thus, according to the present invention there is provided a declutching mechanism as defined in claim 1.

The invention will now be described, by way of example only, with reference to the accompanying drawings in which:-
FIGURE 1 shows a declutching mechanism according to the present invention in an engaged position,
FIGURE 2 shows the declutching mechanism of figure 1 in a disengaged position, and
FIGURES 3 and 4 show a reverse side view of the declutching mechanism of figure 1 and 2 respectively incorporated into a door opening/closing system,
FIGURE 5 shows part of figure 4,
FIGURES 6A to 7E show part of the reluctance motor of figure 1 in various positions,
FIGURES 8 and 9 show the torque output from the armature of figure 1 at various positions and conditions,
FIGURES 10 and 11 show the armature of figure 1 as positioned in figures 3 and 4 respectively,
FIGURES 12A to 13C show the declutching mechanism of figure 1 incorporated into a door opening/closing system.

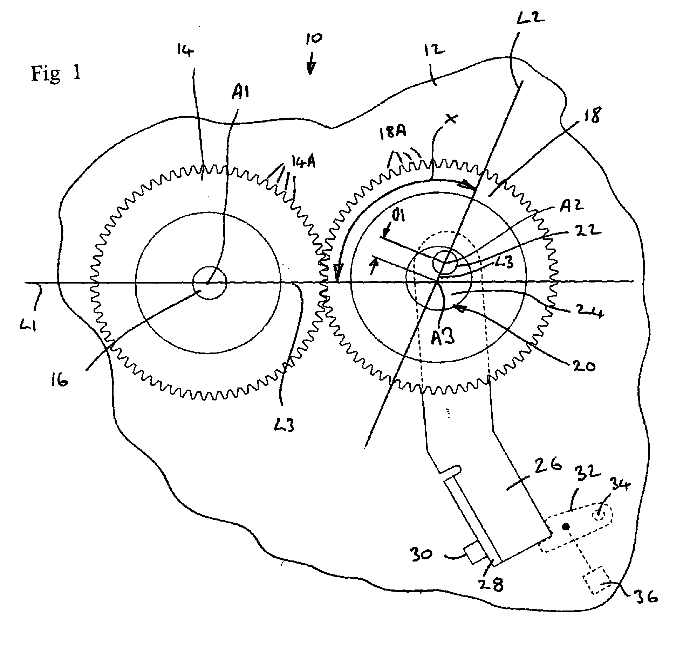

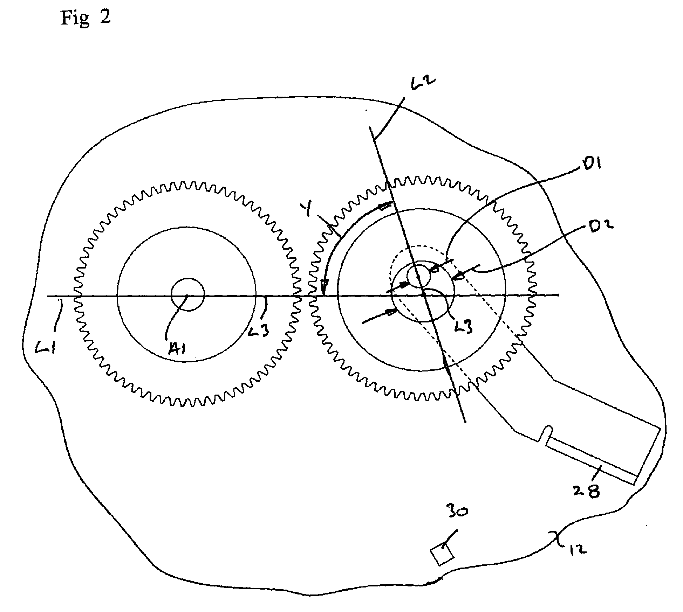

With reference to figures 1 and 2, there is shown a declutching mechanism 10 including a chassis (shown schematically) 12. A first gear 14 is rotatable relative to the chassis about a first gear axis A1. In this case axis A1 is defined by pivot pin 16 which is fixed relative to the chassis 12. Thus, first gear 14 can rotate about pivot pin 16.

In further embodiments an axle could be rotatably fixed relative to the first gear and rotate in a suitable hole in the chassis 12. First gear 14 includes an array of gear teeth 14A.

A second gear 18 is also provided which has an array of gear teeth 18A.

An eccentric arrangement 20 includes a first shaft 22 having a first shaft axis A2 and a diameter D1. The first shaft 22 is non-rotatably fixed to a second shaft 24 having a second shaft axis A3 and a diameter D2.

It will be appreciated that the first shaft axis A2 is offset from the second shaft axis A3 by a distance O1.

The first shaft is longer than the second shaft and projects from each end of the second shaft. Each end of the first shaft is mounted in a hole (not shown) in the chassis 12. The eccentric arrangement can therefore selectively rotate about axis A2 relative to the chassis 12. Note that the first shaft axis A2 does not move relative to chassis 12, whereas the second shaft axis A3 can move (as described below) relative to chassis 12.

The second gear 18 is pivotally mounted on the second shaft 24.

Secured rotationally fast to an end of the first shaft remote from the second shaft is a lever 26. End 28 of lever 26 is made from a magnetic material, in this case steel.

An electromagnet 30 (shown schematically) is capable of holding the first gear 14 in meshing engagement with the second gear 18. Thus when the electromagnet 30 is being powered it magnetically attracts end 28 of lever 26 thereby holding lever 26 in the position shown in figure 1.

Because lever 26 is being held in the position shown in figure 1, then the second shaft axis A3 is also held in the position shown in figure 1. Accordingly, the second gear 18 and second shaft axis A3 are positioned as shown in figure 1.

When the first gear 14 rotates in a clockwise direction it transmits power to the second gear 18 which in turn rotates in an anticlockwise direction. Under these circumstances the profile of the gear teeth is such as to generate separating forces which act to move the first and second gears apart. However, because the first gear is rotatable about the first gear axis A1 which is fixed relative to the chassis, and because the second gear is rotatable about the second shaft 24 and because the second shaft axis A3 is fixed in the position shown in figure 1 because the electromagnet 30 is holding the eccentric arrangement in that position, the first and second gears cannot separate and therefore power is transmitted from the first gear to the second gear.

In the event that it is necessary to declutch the gears this can be achieved by simply cutting power to the electromagnet 30. Under these circumstances once power is cut, then end 28 is no longer attracted to the electromagnet. The separating forces acting through the second shaft axis A3 cause the eccentric arrangement to rotate in an anticlockwise direction about the first shaft axis A2 to the position shown in figure 2. It can be seen that end 28 is spaced from the electromagnet 30 and that the array of gear teeth 14A have become disengaged from the array of gear teeth 18A. As such, the mechanism has declutched the first gear 14 from the second gear 18 and no further power can be transmitted.

Figure 1 shows a line L1 drawn through the first gear axis A1 and the second shaft axis A3. Figure 1 also shows line L2 which is drawn through the first shaft axis A2 and the second shaft axis A3. Lines L1 and L2 together define a third line L3 starting at the first gear axis A1 passing through the second shaft axis A3 and ending at the first shaft axis A2. Line L subtends an angle X at the second shaft axis of 118 degrees.

Figure 2 shows equivalent lines L1, L2 and L3 when the mechanism has been declutched. In this case line L3 subtends an angle Y at the second shaft axis of 65 degrees.

It will be appreciated that angle X is greater than 0 degrees and less than 180 degrees. In this case angle X is greater than 90 degrees though in further embodiments this need not be the case. Consideration of figure 2 shows that angle Y is less than 90 degrees, though in further embodiments this need not be the case.

The embodiments shown in figure 1 allows relatively large torques to be transmitted between the first and second gears whilst only requiring the electromagnet 30 to generate a relatively low holding force. The reasons for this are twofold. Firstly, the profile of the gear teeth is such that the separating forces (i.e. the radially generated forces) are considerably less than the tangential torque forces. Secondly, the offset O1 between the first shaft axis A2 and the second shaft axis A3 is less than the effective lever length, i.e. the distance between the first shaft axis A2 and end 28.

The declutching mechanism can be reset by returning lever 26 to the figure 1 position and by powering the electromagnet.

As mentioned above, the lever 26 is rotationally secured to an end of the first shaft and by holding lever 26 in the position shown in figure 1 this in turn holds the eccentric arrangement in the position shown in figure 1. In further embodiments, the lever 26 can be dispensed with and the eccentric arrangement can be held in the position shown in figure 1 by other arrangements.

As mentioned above, when lever 26 is provided, it is held in place by the magnetic attraction of electromagnet 30. However, in further embodiments a pawl could hold the lever 26 in position. Figure 1 shows in chain dotted outline such a pawl 32 pivotable about pawl axis 34. The pawl can be rotated anticlockwise by a release mechanism 36 (shown schematically). Under these circumstances it is not necessary to make the end 28 of lever 26 from a magnetic material.

Note that when it is not required to transmit power from the first gear to the second gear, then there will clearly be no separating forces. As such, it is not required to power the electromagnet 30, thereby saving electrical power. Once it is required to transmit power from first gear 14 to second gear 18, then the electromagnet 30 can be powered to ensure the power can be transmitted from the first gear 14 to the second gear 18 (until such time as it is necessary to declutch the system).

As mentioned above, as shown in figure 1, first gear 14 is a driving gear and second gear 18 is a driven gear, i.e. power is transferred from the first gear to the second gear. Typically the first gear will be driven by an electric motor. As mentioned above, and by way of example, first gear 14 is powered in a clockwise direction thereby driving second gear 18 in an anticlockwise direction. When it becomes necessary to declutch the gears and the second gear moves to the position shown in figure 2, not only is it not being driven in an anticlockwise direction, it is now free to rotate backwards, i.e. free to rotate in a clockwise direction. This is particularly useful to prevent trapped situations. For example, the mechanism could be used to close (or cinch) a vehicle door. If the system detects a trapped situation (such as fingers being trapped in the door) then power to the electromagnet 30 can be cut and the motor is thereby declutched. By allowing the second gear 18 to rotate backwards in a clockwise direction this allows the door to be opened thereby freeing the partially trapped fingers. The system can also be used on window winders to ensure that fingers and the like are not trapped between a rising window glass and a door frame or other fixed structure of the vehicle.

As mentioned above, power is transmitted from first gear 14 to second gear 18 by driving first gear 14 clockwise. In further embodiments, power could be transmitted from first gear 14 to second gear 18 by driving the first gear 14 anticlockwise. Under such circumstances the separating forces are the same and would still act to declutch the system.

In yet further embodiments second gear 18 could be used to transmit power to first gear 14 and the system would still declutch, since the separating forces would be the same.

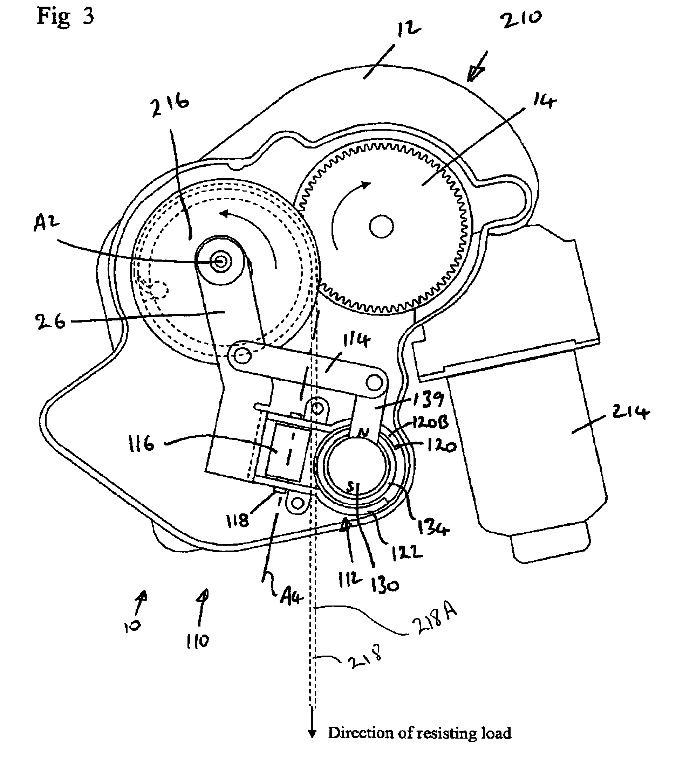

In summary, when electromagnet 30 is powered it acts to hold lever 26 thereby allowing power transmission between gears 14 and 18. When power to electromagnet 30 is cut, the separating forces disengage gears 14 and 18 as shown in figure 2. The declutching mechanism can be reset by returning lever 26 to the figure 1 position and powering the electromagnet 30. Figures 3 to 5 show a holding/releasing/resetting mechanism 110 that incorporates the declutching mechanism 10 with electromagnet 30 and also allows resetting of lever 26.

Thus with reference to figure 3 there is shown a mechanism 110 including a reluctance motor 112 and a link 114.

The lever 26 is pivotally mounted about axis A2 to a chassis 12 of the mechanism. The lever 26 includes an end 28. End 28 is made from a magnetic material, in this case steel.

The reluctance motor 112 includes a coil 116 which defines an axis A4. The coil includes an iron core 118. A first pole piece 120 is connected to one end of the iron core and a second pole piece 122 is connected to the other end of the iron core 118. The first pole piece 120 extends generally perpendicularly to the coil axis A4 and has a first end 120A and a second end 120B. The second pole piece 122 similarly extends generally perpendicularly to the coil axis A4 and has a first end 122A and a second end 122B. The reluctance motor includes an armature 130 which is rotatable about axis A5 and includes an iron core 132 surrounded by a ring magnet 134. The ring magnet is a permanent magnet having a north pole N and a south pole S. The armature also includes a radially orientated output lever 138. End 139 of output lever 138 is pivotally connected to one end of link 114.

An opposite end of link 114 is pivotally connected to lever 26.

As shown in figure 3, second ends 120B and 122B partially surround the armature 130. First ends 120A and 122A are in contact with end 28 of lever 26.

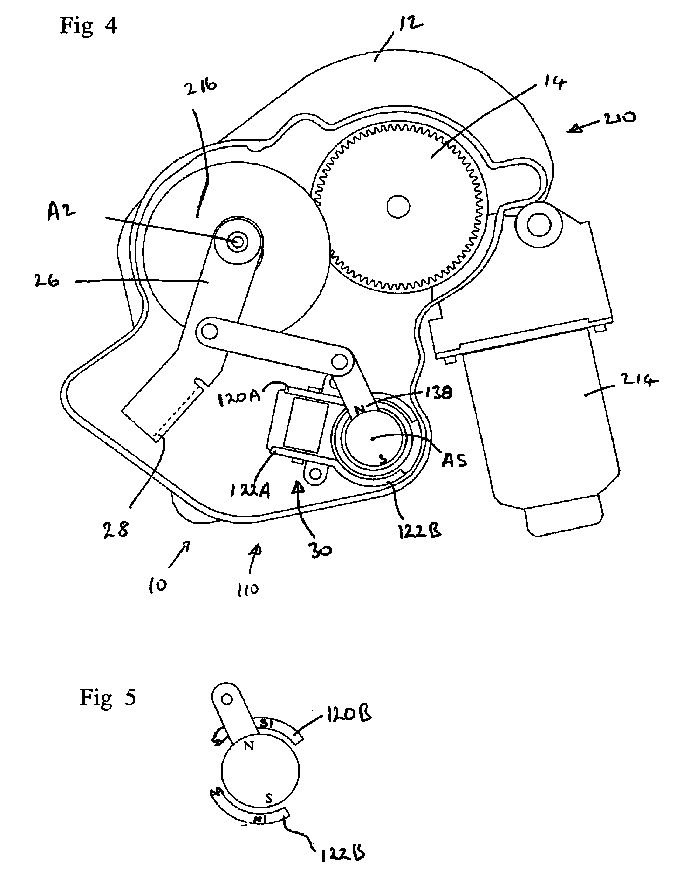

Operation of the mechanism is as follows:-
In summary, powering of the coil 116 holds the lever 26 in the position shown in figures 1 and 3. When power to the coil 116 is cut, the lever can move to the position shown in figures 2 and 4. Subsequent powering of the coil causes the armature to rotate in a clockwise direction (when viewing figures 3 and 4) returning the mechanism to the position shown in figures 1 and 3.
In more detail, the mechanism 110 has a first condition, as shown in figure 3 in which the coil is powered such that the first pole piece 120 is a south pole and the second pole piece 122 is a north pole. As such, the north pole N of the ring magnet is attracted to the second end 120B of the first pole piece 120 and the south pole S of the ring magnet 134 is attracted to the second end 122B of the second pole piece.

Furthermore, powering of the coil causes the first end 120A of the first pole piece to become a south pole and causes the first end 122A of the second pole piece to become a north pole. As such the first ends 120A and 122A magnetically attract end 28 of lever 26 and hold it in the position shown in figure 3. It will be appreciated that the coil 116, iron core 118 and first ends 120A and 122A form the electromagnet 30.

Thus, it is possible to hold the lever 26 in the position shown in figure 3 against a torque endeavouring to rotate the lever clockwise about axis A2 when the coil is powered i.e. to hold the lever against the separating forces. However, when power to the coil is cut the electromagnet 30 no longer holds end 28. Similarly, the second ends 120B and 122B no longer form magnetic poles and there is therefore less tendency (see below) for the north N and south S poles of the ring magnet 134 to align as shown in figure 3. As such, a force attempting to rotate lever 26 clockwise when viewing figure 3 about axis A2 (i.e. the separating forces) will move the lever to the position shown in figure 4 wherein the end 28 is spaced from the electromagnet 30.

As the lever 26 moves to the position shown in figures 2 and 4, it moves the link 114 which in turn causes the armature to rotate anticlockwise to the position shown in figure 4. It can be seen that the north N and south S poles of the ring magnet 134 are misaligned with the second ends 120B and 122B respectively of the first and second pole pieces respectively.

In order to return the mechanism 110 to the position shown in figures 1 and 3 it is necessary to repower the coil 116. This will cause the first pole piece 120 to become a south pole and the second pole piece to become a north pole. Figure 5 shows the moment when the coil has been repowered but prior to movement of the armature. The second end 120B forms a south pole S1 and the second end 120B forms a north pole N1. When this occurs, north pole N endeavours to align with south pole S 1 and south pole S endeavours to align with north pole N1 thereby rotating the armature in a clockwise direction when viewing figure 5 to return it to the position shown in figures 1 and 3. As the armature rotates the output lever 138 moves the link 114 generally to the right as shown in figure 4 which in turn causes the lever 26 to rotate anticlockwise about axis A2, thereby returning it to the position shown in figure 3. Once end 28 engages the first ends 120A and 122A then the electromagnet holds the lever 26 in that position.

As will be appreciated, the mechanism 110 allows the lever 26 to be selectively held in one position and selectively released, thereby allowing lever 26 to move to a second position. The mechanism 110 also allows the lever 26 to be reset to a position wherein the mechanism can again hold the lever.

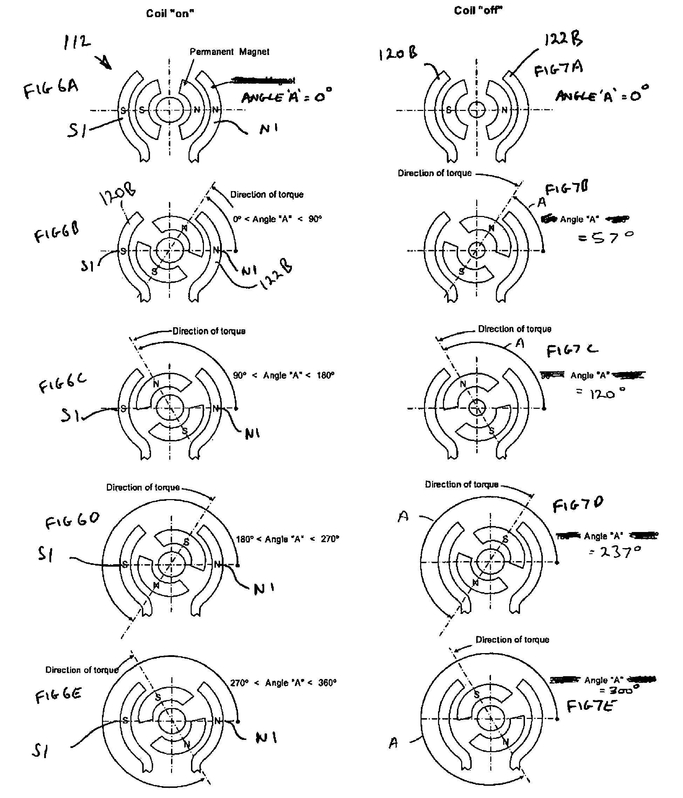

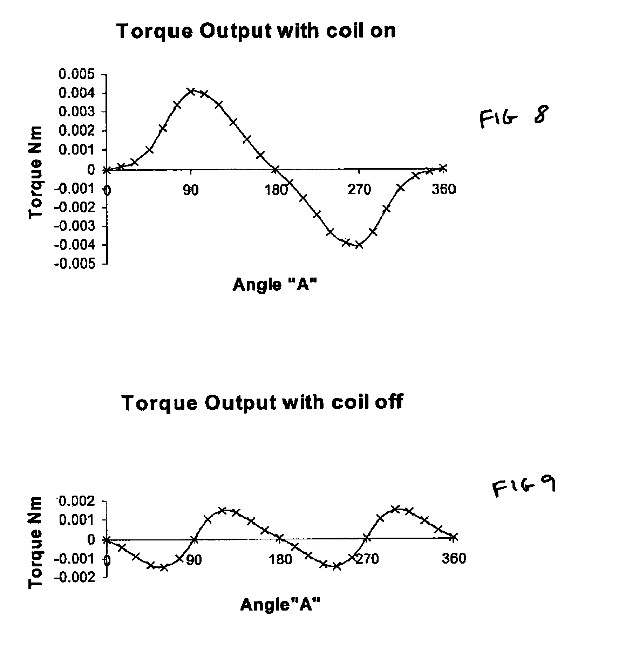

A more detailed explanation of the operation of the reluctance motor 112 is as follows:-
Figures 6A to 7E show various positions of the armature 130 of the reluctance motor 112 prior to assembly of the reluctance into the mechanism 110. As such it is possible to rotate the armature through 360 degrees. Considering figure 7A, the armature is aligned with a nominal datum with the armature north pole on the right when viewing the figure and the armature south pole on the left when viewing the figure. The armature is thus positioned at zero degrees to the datum. Figure 7B shows the armature having been rotated through 57 degrees anticlockwise from the figure 7A position. Figure 7C, 7D and 7E show the armature having been rotated through 120 degrees, 237 degrees and 300 degrees respectively from the figure 7A position. Thus, as shown in figure 7B, the armature is between 0 and 90 degrees from the figure 7A position, as shown in figure 7C the armature is between 90 and 180 degrees from the figure 7A position, as shown in figure 7D the armature is between 180 and 270 degrees from the figure 7A position and as shown in figure 7E the armature is between 270 degrees and 360 degrees from the figure 7A position. Figure 9 shows the torque output of the armature when no current is passing through the coil 116. It can be seen that there are four positions at which the armature produces zero torque namely 0/360 degrees (i.e. the figure 7A position), 90 degrees, 180 degrees and 270 degrees. At the 0/360 degree position and 180 degree position the armature is in a stable equilibrium position, i.e. a slight displacement of the armature in either a clockwise or anticlockwise direction from this position will result in it returning to that position. In the 90 degree and 270 degree position, the armature is in an unstable equilibrium position, i.e. a slight displacement from this position in either a clockwise or anticlockwise direction will result in the armature moving to the 0/360 degree position or to the 180 degree position as appropriate.

When the armature is positioned between 0 and 90 degrees, the torque output of the armature is negative, and in the present case this represents a torque applied in a clockwise direction to the armature when viewing figure 7B. Between 90 and 180 degrees the torque applied to the armature is anticlockwise. Between 180 degrees and 270 degrees the torque applied to the armature is clockwise. Between 270 and 360 degrees the torque applied to the armature is anticlockwise.

The torque is a result of the magnetic attraction between the north and south poles of the armature and the magnetic material, e.g. steel from which the second ends 120B and 122B are made. In summary, when the armature is between 0 and 90 degrees or between 270 and 360 degrees the torque on the armature is such so as to move it towards 0 degrees. However, when the armature is between 90 degrees and 180 degrees or between 180 degrees and 270 degrees, the torque on the armature is such as to rotate the armature to the 180 degree position.

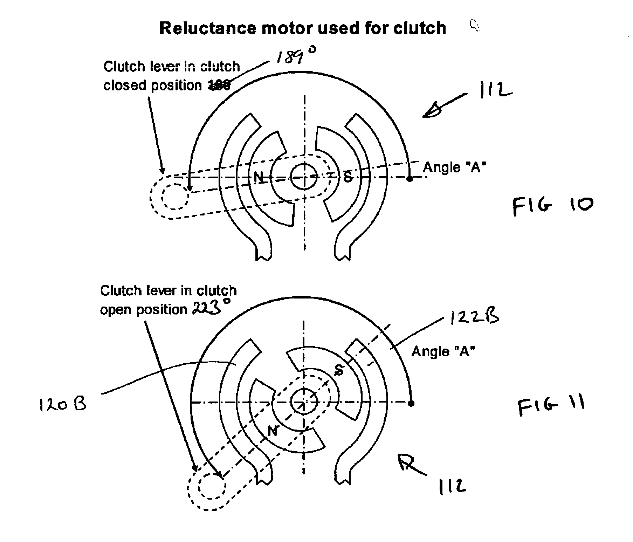

Figure 10 shows the armature at an angle of 189 degrees, i.e. slightly greater than 180 degrees. This is the position of the armature as shown in figure 3. Consideration of figure 9 shows that the torque on the armature is slightly negative, ie. a slight clockwise torque is applied to the armature. This clockwise torque acts on the output member 139 which in turn tends to pull the link 114 generally to the right when viewing figure 3. The result of this is that even when there is no current flowing through coil 116, end 28 of lever 26 is held in light engagement with first ends 120A and 122A. This can be advantageous.

Figures 6A to 6E correspond to figure 7A to 7E respectively except in this case the coil 116 has been powered to generate a south pole S1 at second end 120B and a north pole N1 at second end 122B. Figure 8 shows the corresponding torque on the armature at various angles. A comparison of figures 8 and 9 show that:-
a) with coil 116 powered the maximum torque generated by the armature is greater than when coil 116 is not powered, and
b) between 0 degrees and 180 degrees the torque is always positive (anticlockwise) and between 180 degrees and 360 degrees torque is always negative (clockwise) when the coil 116 is powered.

Figure 11 shows the armature in the same position as shown in figure 4 and 5, namely at an angle of 223 degrees. Consideration of figure 8 shows that when coil 116 is powered as shown in figure 5 the torque applied to the armature is negative (i.e. applied in a clockwise direction) to return the armature to the figure 3/10 position.

The declutching mechanism 10 and the mechanism 110 form part of a vehicle door power opening/closing mechanism 210. Motor 214 selectively drives first gear 14 in a clockwise or anticlockwise direction, depending upon whether it is requires to open or close the door. A gear box mechanism (not shown) connects the output shaft of motor 214 to the first gear 14.

The second gear 18 is obscured in figures 3 and 4 by cable drum 216 which is secured rotationally fast to second gear 18. The cable drum and the second gear both rotate about the second shaft 24. A cable 218 has several turns wound around the cable drum 216 and has a portion 218A positioned tangentially relative to the cable drum. A further part of cable 218 is connected to a slider mechanism on the sliding door to open and close the door.

In the event that a trap situation is encountered when the door is being opened or closed, then power to the electromagnet 30 is cut resulting in the second gear 18 moving to the position shown in figure 2 thereby disengaging the gear teeth. This then allows second gear 18 to be rotated backwards i.e. rotated so as to open the door if the trap situation was encountered during closing of the door, or rotated so as to close the door if the trap situation was encountered during opening of the door. The system can be reset using the reluctance motor as described above.

Note that the tension in tangential portion 218A has an effect on how easily the gears 14 and 18 separate when declutching. Thus by varying the point around the periphery of the cable drum at which the tangential portion 218A leaves the drum, the tension in the tangential portion can either pull the gears together or pull them apart and this must be taken into consideration when designing the mechanism 210.

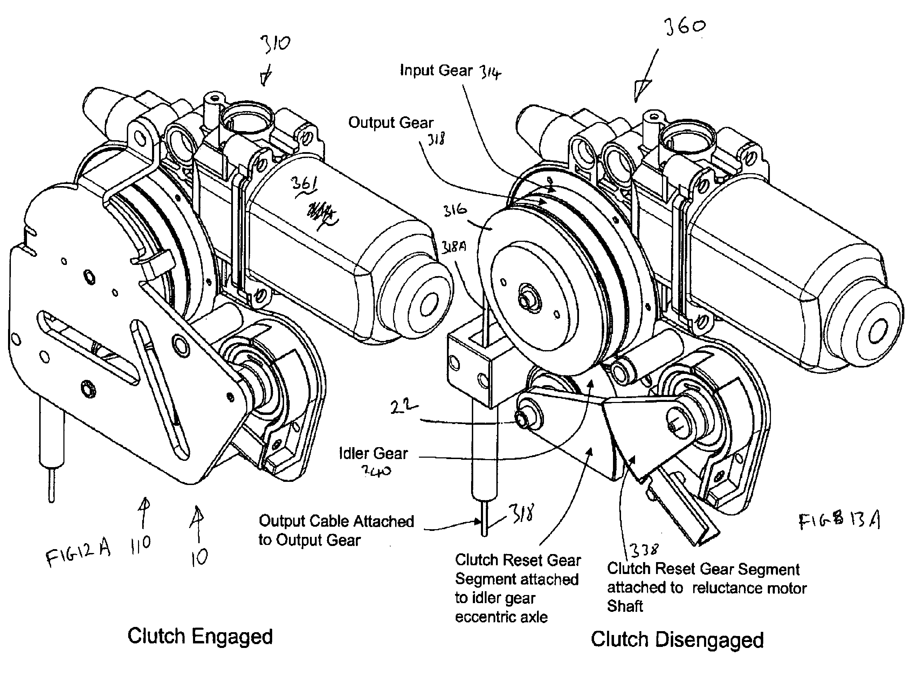

Figures 12A to 13C show a second embodiment of a vehicle door power opening/closing mechanism 310 which includes the declutching mechanism 10 and a variant of mechanism 110.

In summary the mechanism 310 includes an intermediate gear 340 that operably connects and disconnects input gear 314 and output gear 318. Gear 318 rotates about the same axis as gear 314. The armature output lever 338 is in the form of a gear segment which engages with a gear segment 350 attached to first shaft 22.

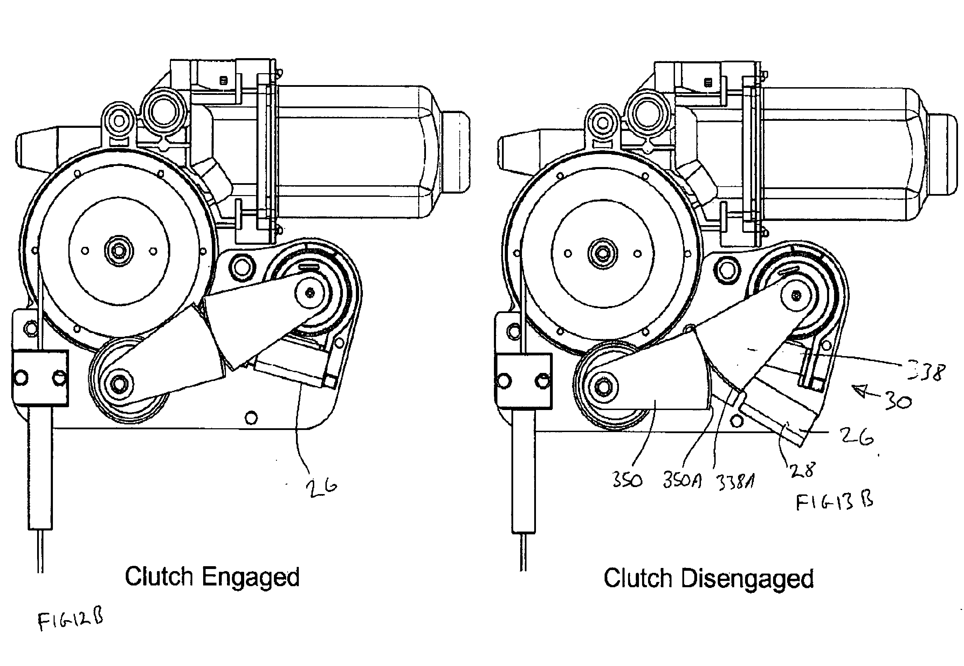

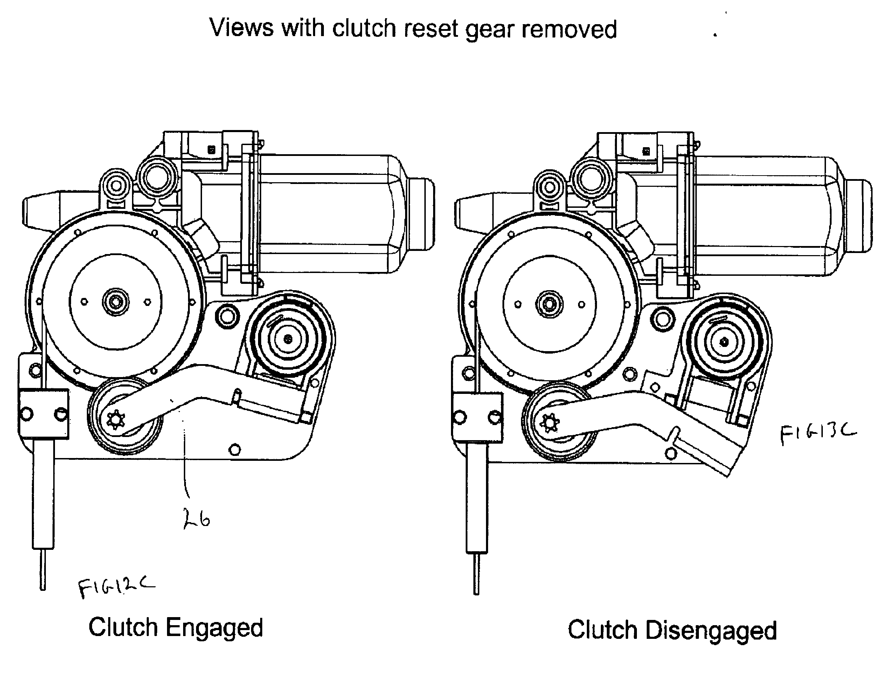

In more detail motor 361 selectively drives first gear 314 in a clockwise or anticlockwise direction, depending upon whether it is required to open or close the door. A gear box mechanism 360 connects the output shaft of motor 361 to input gear 314. Input gear 314 includes an array of gear teeth (not shown) around its peripheral edge. An output gear 318 is secured rotationally fast to a cable drum 316 similar to cable drum 216. The output gear 318 has an array of gear teeth (not shown) around its peripheral edge. Output gear 318 rotates about the same axis as input gear 314. Intermediate gear 340 has an array of gear teeth (not shown) around its peripheral edge. Intermediate gear 340 is approximately two times wider than either the input gear 314 or the output gear 318. As shown in figures 12A, 12B and 12C, the teeth of the intermediate gear are in meshing engagement with the teeth of both the input gear 314 and the output gear 318 As such, as input gear 314 is rotated by the motor it causes the intermediate gear to rotate which in turn causes the output gear to rotate thereby drawing in or letting out the cable. The intermediate gear 340 can be disengaged (see figures 13A to 13C) from both the input and output gears in a manner similar to the way in which gear 18 is disengaged from gear 14 as mentioned above.

Note that the axis about which the cable drum 316 rotates does not move its position. As such, the tension in the tangential portion 318A of the cable 318 does not affect how the intermediate gear 340 disengages from and reengages the input gear 314 and the output gear 318.

Once the intermediate gear 314 has disengaged from input gear 314 and output gear 318 it can be reengaged with them by powering the reluctance motor which causes the gear segment 338 to rotate in an anticlockwise direction. Gear segment 338 includes an array of gear teeth 338A (shown schematically) which engage with an array of gear teeth 350A of gear segment 350. Gear segment 350 is secured to shaft 22. Thus, as gear segment 350 is rotated anticlockwise by gear segment 338, end 28 reengages the electromagnet 30. Thus, gear segment 338 and 350 act to return the mechanism 10 to its engaged position in a manner similar to operation of armature output lever 138 and link 114.

Note that input gear 314 and output gear 318 have the same diameter and hence intermediate gear 340 acts as an idler, i.e. when the intermediate gear 340 is in meshing engagement with both input gear 314 and output gear 318, the input gear 314 and output gear 318 will rotate at the same speed.

In further embodiments, the input gear 314 could be a different diameter to the output gear 318. This would require gear 340 to be in two parts, on one side intermediate gear 340 would have a diameter sufficient to engage with input gear 314, and on the other side gear 340 would have a different diameter suitable to engage output gear 318. Under these circumstances when gear 340 was engaged with both input gear 314 and output gear 318 then input gear 314 would rotate at a different speed to output gear 318. The relative diameters of the input gear and output gear could be such that either the input gear rotated faster than the output gear or alternatively the input gear could rotate slower than the output gear.

## Claims

1. A declutching mechanism including
a chassis,
a first gear rotatable relative to the chassis about a first gear axis fixed relative to the chassis,
a second gear selectively engageable with the first gear,
an eccentric arrangement having a first shaft with a first shaft axis and a second shaft with a second shaft axis offset from the first shaft axis, the first shaft being non-rotatably fixed to the second shaft, the first shaft being selectively rotatably mounted in the chassis, the second gear being rotatably mounted on the second shaft,
a holding means for selectively holding the eccentric arrangement in a first position,
in which with the eccentric arrangement being held in the first position by the holding means the first and second gears are in meshing engagement and with the eccentric arrangement being released by the holding means, gear separating forces cause the eccentric arrangement to rotate about the first axis to a second position, thereby disengaging the first and second gears.

2. A declutching mechanism as defined in claim 1 in which the first shaft has a diameter smaller than a diameter of the second shaft.

3. A declutching mechanism as defined in claim 1 in which the second shaft has a diameter and the first axis is positioned within the diameter of the second shaft.

4. A declutching mechanism as defined in claim 1 in which the second shaft has a diameter and all of the first shaft is positioned within the diameter of the second shaft.

5. A declutching mechanism as defined in any preceding claim in which with the eccentric arrangement in the first position a line drawn from the first gear axis to the second shaft axis and to the first shaft axis subtends an angle at the second shaft axis of more than 0 degrees and less than 180 degrees.

6. A declutching mechanism as defined in claim 5 in which said line subtends an angle at the second shaft axis of more than 90 degrees.

7. A declutching mechanism as defined in claim 5 or 6 in which with the eccentric arrangement in the second position said line subtends an angle of less than 90 degrees.

8. A declutching mechanism as defined in any preceding claim in which the eccentric arrangement includes a lever rotationally fixed relative to the eccentric arrangement.

9. A declutching mechanism as defined in claim 8 in which the lever is rotationally fixed to the first shaft.

10. A declutching mechanism as defined in claim 8 or 9 in which the holding means engages the lever to selectively hold the eccentric arrangement in the first position.

11. A declutching mechanism as defined in claim 10 in which the holding means is a pawl.

12. A declutching mechanism as defined in claim 10 in which the holding means is an electromagnet.

13. A declutching mechanism as defined in claim 12 including
a reluctance motor having a coil and two pole pieces defining the electromagnet and an armature, with the armature being operably coupled to the lever,
the mechanism having a first condition in which the reluctance motor is powered and the lever engages the pole pieces to magnetically hold the lever in a first position and a second condition in which the reluctance motor is unpowered and the lever is in a second position disengaged from the pole pieces and with the mechanism in the second position, powering of the reluctance motor causes the armature to rotate to drive the lever to the first position.

14. A declutching mechanism as defined in claim 13 in which there are only two pole pieces.

15. A declutching mechanism as defined in claim 14 in which the coil defines a coil axis and each pole piece extends generally perpendicularly to the coil axis, each pole piece having a first end for engaging the lever and each pole piece having a second end which partially surrounds the armature.

16. A declutching mechanism as defined in any one of claims 13 to 15 in which the armature has an output lever operably connected to said lever.

17. A declutching mechanism as defined in claim 16 in which the output lever is connected to said lever by a link.

18. A declutching mechanism as defined in any one of claims 13 to 15 in which the armature has an output lever in the form of a gear segment which engages a further gear segment which further gear segment is connected to said first shaft.

19. A declutching mechanism as defined in any preceding claim in which the second gear is fixed rotationally fast with a cable drum.

20. A declutching mechanism as defined in any one of claims 1 to 18 in which second gear is selectively engageable with a third gear.

21. A declutching mechanism as defined in claim 20 in which the third gear is rotatable about the same axis as the first gear.

22. A declutching mechanism as defined in claim 20 or 21 in which the third gear rotates at the same speed as the first gear when engaged by the second gear.

23. A declutching mechanism as defined in claim 20 or 21 in which the third gear rotates at a different speed from the first gear when engaged by second gear.

24. A vehicle door power opening system including a mechanism as defined in any preceding claim for declutching and reclutching components of a transmission path between the vehicle door actuator and the vehicle door.
